# EUROPÄISCHE PATENTSCHRIFT

(11) **EP 3 233 546 B1**
(45) Veröffentlichungstag und Bekanntmachung des Hinweises auf die Patenterteilung: **13.05.2020**
(21) Anmeldenummer: 15794177.4
(22) Anmeldetag: 12.11.2015
(51) Int. Cl.: B60H 1/24, B29C 70/46, B29C 70/54, B29L 31/30

(54) **VERFAHREN ZUR HERSTELLUNG EINES KAROSSERIEBAUTEILS FÜR EIN KRAFTFAHRZEUG, VORRICHTUNG ZUR HERSTELLUNG EINES KAROSSERIEBAUTEILS FÜR EIN KRAFTFAHRZEUG UND KAROSSERIEBAUTEIL FÜR EIN KRAFTFAHRZEUG**
METHOD FOR PRODUCING A BODY COMPONENT FOR A MOTOR VEHICLE, DEVICE FOR PRODUCING A BODY COMPONENT FOR A MOTOR VEHICLE AND BODY COMPONENT FOR A MOTOR VEHICLE
PROCÉDÉ DE FABRICATION D'UN ÉLÉMENT STRUCTURAL DE CARROSSERIE POUR UN VÉHICULE AUTOMOBILE, DISPOSITIF DE FABRICATION D'UN ÉLÉMENT STRUCTURAL DE CARROSSERIE POUR UN VÉHICULE AUTOMOBILE, ET ÉLÉMENT STRUCTURAL DE CARROSSERIE POUR UN VÉHICULE AUTOMOBILE

(30) Priorität: 16.12.2014 DE 102014118733
(43) Veröffentlichungstag der Anmeldung: 25.10.2017
(73) Patentinhaber: EuWe Eugen Wexler Holding GmbH & Co. KG, 91207 Lauf a. d. Pegnitz (DE)
(72) Erfinder: WEXLER, Matthias Wolfgang, 90607 Rückersdorf (DE)
(74) Vertreter: Hafner & Kohl PartmbB
(86) Internationale Anmeldenummer: PCT/EP2015/076434
(87) Internationale Veröffentlichungsnummer: WO 2016/096266

(56) Entgegenhaltungen:
- DE-A1- 19 922 799
- FR-A1- 2 792 869
- US-B1- 6 273 127

## Beschreibung

Die Erfindung betrifft ein Verfahren zur Herstellung eines Karosseriebauteils für ein Kraftfahrzeug, welches Karosseriebauteil aus einem in einer Kunststoffmatrix eingebetteten Fasergelege gebildeten Grundkörper gebildet ist und wenigstens eine Entlüftungsvorrichtung, insbesondere zur Entlüftung eines Innenraums des Kraftfahrzeugs, umfasst, welche Entlüftungsvorrichtung wenigstens eine über wenigstens ein Lüftungsklappenelement reversibel verschließbare Lüftungsöffnung umfasst.

Es ist bekannt, moderne Kraftfahrzeuge zumindest abschnitts- oder teilweise aus aus einem in einer Kunststoffmatrix eingebetteten Fasergelege gebildeten Faserverbund- bzw. Kompositmaterial auszubilden. Entsprechende Faserverbund- bzw. Kompositmaterialien werden in jüngerer Zeit auch zur Ausbildung von Teilen der Fahrzeugkarosserie verwendet, sodass bestimmte Karosseriebauteile aus entsprechenden Faserverbund- bzw. Kompositmaterialien gebildet werden.

Die Dokumente US 6,273,127 und FR 2 792 869 offenbaren beide die Herstellung eines Karosseriebauteils mit einem Grundkörper und ein Lüftungsklappenelement.

Die Anbringung an sich bekannter Entlüftungsvorrichtungen, welche typischerweise der Entlüftung eines Innenraums des Kraftfahrzeugs, dienen, an aus Kompositmaterialien gebildeten Karosseriebauteilen ist bis dato vergleichsweise aufwändig. Im Hinblick auf die Anbringung entsprechender Entlüftungsvorrichtungen an entsprechende Karosseriebauteile besteht sonach ein Entwicklungsbedarf. Insbesondere besteht ein Bedarf nach einem hochintegrierbaren bzw. hochintegrierten sowie fertigungs- bzw. prozesstechnisch zuverlässigen Verfahren zur Anbringung bzw. Ausbildung entsprechender Entlüftungsvorrichtungen an entsprechende(n) Karosseriebauteile(n).

Der Erfindung liegt die Aufgabe zugrunde, ein hochintegriertes sowie fertigungs- bzw. prozesstechnisch zuverlässiges Verfahren zur Herstellung eines Karosseriebauteils für ein Kraftfahrzeug, welches Karosseriebauteil aus einem in einer Kunststoffmatrix eingebetteten Fasergelege gebildeten Grundkörper gebildet ist und wenigstens eine Entlüftungsvorrichtung, insbesondere zur Entlüftung eines Innenraums des Kraftfahrzeugs, umfasst, welche Entlüftungsvorrichtung wenigstens eine über wenigstens ein Lüftungsklappenelement reversibel verschließbare Lüftungsöffnung umfasst, anzugeben.

Die Aufgabe wird durch ein Verfahren der eingangs genannten Art gelöst, welches Verfahren sich durch die Schritte auszeichnet:
- Bereitstellen wenigstens einer, insbesondere flächigen, Lage eines in einer Kunststoffmatrix eingebetteten ein- oder mehrlagigen Fasergeleges zur Ausbildung des oder eines Teils des Grundkörpers,
- Ausbilden wenigstens einer Öffnung in dem Grundkörper zur Ausbildung wenigstens einer Lüftungsöffnung, oder
- Bereitstellen wenigstens einer, insbesondere flächigen, Lage eines in einer Kunststoffmatrix eingebetteten ein- oder mehrlagigen Fasergeleges mit wenigstens einer Öffnung zur Ausbildung des oder eines Teils des Grundkörpers mit wenigstens einer Lüftungsöffnung, und
- Anbringen wenigstens eines Lüftungsklappenelements an den Grundkörper derart, dass dieses die wenigstens eine grundkörperseitige Öffnung zumindest abschnittsweise verschließt, zur Ausbildung der Entlüftungsvorrichtung.

Das hierin beschriebene Verfahren richtet sich im Allgemeinen auf die Herstellung eines Karosseriebauteils für ein Kraftfahrzeug, welches aus einem in einer Kunststoffmatrix eingebetteten Fasergelege gebildeten Grundkörper gebildet ist. Bei dem verfahrensgemäß herzustellenden bzw. hergestellten Karosseriebauteil handelt es sich somit dem Grunde nach um ein aus einem Faserverbundmaterial bzw. Kompositmaterial in Form eines entsprechenden in einer Kunststoffmatrix eingebetteten Fasergeleges gebildetes Faserverbundbauteil bzw. Kompositbauteil.

Entsprechende Kompositmaterialien bestehen im Allgemeinen aus einem in einem ein- oder mehrlagigen Gelege in einer bestimmten Ausrichtung und Orientierung angeordneten Fasermaterial, welches von einer thermoplastischen oder einer duroplastischen Kunststoffmatrix umgeben, mithin in eine thermoplastische oder eine duroplastische Kunststoffmatrix eingebettet ist. Als Fasermaterialien werden typischerweise Glas- oder Kohlefasern eingesetzt, gleichwohl ist auch der Einsatz von Aramidfasern denkbar. Selbstverständlich ist es möglich, (chemisch) unterschiedliche Fasermaterialien in einem Fasergelege zu verwenden. Als thermoplastische Kunststoffmatrizen kommen im Allgemeinen thermoplastische Kunststoffmaterialien, z. B. Polyamid, Polyethylen oder Polypropylen, etc. zum Einsatz. Als duroplastische Kunststoffmatrizen kommen im Allgemeinen duroplastische Kunststoffmaterialien, z. B. Acrylate, Epoxidharze, Phenylharze, Polyurethane, etc. zum Einsatz.

Das verfahrensgemäß herzustellende bzw. hergestellte Karosseriebauteil umfasst wenigstens eine Entlüftungsvorrichtung, insbesondere zur Entlüftung eines Innenraums des Kraftfahrzeugs. Eine entsprechende Entlüftungsvorrichtung ist sonach in das verfahrensgemäß herzustellende bzw. hergestellte Karosseriebauteil integriert. Eine entsprechende Entlüftungsvorrichtung umfasst wenigstens eine von wenigstens einem Lüftungsklappenelement reversibel verschließbare Lüftungsöffnung. Unter einem reversiblen Verschluss einer entsprechenden Lüftungsöffnung ist zu verstehen, dass das Lüftungsklappenelement bei entsprechendem Druckunterschied, insbesondere zwischen dem Innenraum und dem Außenraum des Kraftfahrzeugs, zumindest abschnittsweise derart relativ zu der Lüftungsöffnung bewegbar ist, dass es diese nicht mehr verschließt, so dass Luft, typischerweise zum Zwecke des Ausgleichs eines entsprechenden Druckunterschieds, aus dem Innenraum in den Außenraum des Kraftfahrzeugs ausströmen kann. Der Ausgleich eines entsprechenden Druckunterschieds ist insbesondere im Zusammenhang mit dem Öffnen und Schließen kraftfahrzeugseitiger Türen von Belang. In dem die entlüftungsvorrichtungsseitige Lüftungsöffnung verschließenden Zustand verhindert ein entsprechendes Lüftungsklappenelement zudem das Eindringen von Feuchtigkeit, Wasser, Verschmutzungen, etc. in den Innenraum des Kraftfahrzeugs. Ein entsprechendes Lüftungsklappenelement ist typischerweise zumindest abschnittsweise aus einem weich-elastischen bzw. flexiblen Material gebildet.

Der Ort der Fahrzeugkarosserie, an welchem das verfahrensgemäß herzustellende bzw. hergestellte Karosseriebauteil anzubringen ist, ist in Abhängigkeit konkreter funktioneller bzw. konstruktiver Vorgaben eines konkreten Kraftfahrzeugs festzulegen. Hieraus ergibt sich auch die konkrete geometrisch-konstruktive Gestaltung des verfahrensgemäß herzustellenden bzw. hergestellten Karosseriebauteils. Lediglich beispielhaft wird auf eine mögliche Anbringung des Karosseriebauteils im Bereich eines Hecks, insbesondere im Bereich einer Heckklappe, eines Kraftfahrzeugs bzw. eines ein Heck, insbesondere eine Heckklappe, des Kraftfahrzeugs bildenden Bereichs einer Fahrzeugkarosserie verwiesen.

Das Verfahren umfasst die folgenden wesentliche Schritte, welche im Weiteren näher erläutert werden:
In einem ersten Schritt kann zur Ausbildung des oder eines Teils des Grundkörpers des späteren Karosseriebauteils wenigstens eine, insbesondere flächige, Lage eines in einer Kunststoffmatrix eingebetteten ein- oder mehrlagigen Fasergeleges bereitgestellt werden. Bei der wenigstens einen bereitgestellten Lage des in einer Kunststoffmatrix eingebetteten Fasergeleges handelt es sich typischerweise um ein flächiges Halbzeug. Die wenigstens eine bereitgestellte Lage des in einer Kunststoffmatrix eingebetteten Fasergeleges kann bereits im Hinblick auf die Form und Geometrie des herzustellenden Karosseriebauteils konfektioniert, d. h. insbesondere mit entsprechenden geometrischen Abmessungen, vorliegen.

In einem hierauf folgenden zweiten Schritt wird zur Ausbildung der oder wenigstens einer Lüftungsöffnung der Entlüftungsvorrichtung des späteren Karosseriebauteils in dem Grundkörper wenigstens eine Öffnung bzw. Durchbrechung ausgebildet. Eine entsprechende in dem Grundkörper ausgebildete Öffnung bildet sonach einen Strömungskanal für ein im Zusammenhang mit einer Entlüftung aus dem Innenraum des Kraftfahrzeugs in einen Außenraum des Kraftfahrzeugs ausströmendes Gas, typischerweise Luft. Die Ausbildung einer entsprechenden Öffnung erfolgt typischerweise mittels eines Trennprozesses, in welchem wenigstens ein bestimmter Teil des Grundkörpers, insbesondere mechanisch, von übrigen Teilen des Grundkörpers unter Ausbildung einer entsprechenden grundkörperseitigen Öffnung entfernt wird.

Als verfahrensgemäß zweckmäßig eingesetzte Trennprozesse kommen insbesondere Stanz- und/oder Schneidprozesse in Frage, da sich hiermit auf fertigungs- bzw. prozesstechnisch vergleichsweise einfache, effiziente und präzise Weise entsprechende Öffnungen in einer Vielzahl unterschiedlicher Formen bzw. Geometrien in dem Grundkörper ausbilden lassen. Mit anderen Worten erfolgt das Ausbilden der wenigstens einen Öffnung in dem Grundkörper zur Ausbildung wenigstens einer Lüftungsöffnung zweckmäßig mittels wenigstens eines Stanz- und/oder Schneidprozesses. Im Hinblick auf die Form bzw. Geometrie der in dem Grundkörper auszubildenden Öffnung(en) sind insbesondere vieleckige, insbesondere rechteckige, runde oder rundliche, d. h. ellipsoide bzw. ovale, Formen denkbar.

Die Größe entsprechender grundkörperseitig gebildeter Öffnungen kann zwischen wenigen Millimetern und einigen Zentimetern liegen. Beispielhaft wird für runde Öffnungen ein Durchmesserbereich von 1 mm bis 3 cm angegeben. Insbesondere bei im Vergleich kleinen Öffnungen, d. h. Öffnungen unterhalb eines Durchmessers bzw. eine Kantenlänge von 3 mm, ist über die Anzahl und Anordnung der Öffnungen sicherzustellen, dass die Funktionsfähigkeit der Entlüftungsvorrichtung gegeben ist. Eine hierfür geeignete Anordnung wäre z. B. eine matrixartige Anordnung in der eine Vielzahl entsprechender Öffnungen, vorzugsweise eng benachbart, in einer Vielzahl an Reihen und Spalten gebildet wird.

Anstelle des Bereitstellens wenigstens einer, insbesondere flächigen, Lage eines in einer Kunststoffmatrix eingebetteten Fasergeleges zur Ausbildung des oder eines Teils des Grundkörpers und des folgenden Ausbildens wenigstens einer Öffnung in dem Grundkörper zur Ausbildung wenigstens einer Lüftungsöffnung ist es auch möglich, in einem ersten Schritt wenigstens eine, insbesondere flächige, Lage eines in einer Kunststoffmatrix eingebetteten Fasergeleges mit wenigstens einer Öffnung zur Ausbildung des oder eines Teils des Grundkörpers mit wenigstens einer Lüftungsöffnung bereitzustellen. In diesem Fall kann auf die gesonderte Ausbildung von Öffnungen in dem Grundkörper typischerweise verzichtet werden, da bereits ein Grundkörper mit entsprechenden Öffnungen bereitgestellt wird. Selbstverständlich ist es möglich, in einer bereitgestellten, insbesondere flächigen, Lage eines in einer Kunststoffmatrix eingebetteten Fasergeleges mit wenigstens einer Öffnung zusätzliche Öffnungen auszubilden und/oder die Abmessungen, d. h. insbesondere Form und/oder Größe, der in der bereitgestellten Lage ursprünglich vorhandenen Öffnung(en) zu verändern.

In einem letzten Schritt des Verfahrens wird zur Ausbildung der Entlüftungsvorrichtung wenigstens ein Lüftungsklappenelement an den Grundkörper angebracht. Die Anbringung des wenigstens einen Lüftungsklappenelements erfolgt derart, dass dieses die wenigstens eine grundkörperseitige Öffnung zumindest abschnittsweise reversibel verschließt. Die Anbringung des wenigstens einen Lüftungsklappenelements an den Grundkörper kann (beschädigungsfrei- bzw. zerstörungsfrei) lösbar oder unlösbar sein.

Anhand der beschriebenen Schritte lässt sich, wie weiter oben erwähnt, erkennen, dass über das Verfahren eine hochintegrierte sowie fertigungs- bzw. prozesstechnisch zuverlässige Herstellung entsprechender Karosseriebauteile realisierbar ist. Insbesondere ist es verfahrensgemäß möglich, eine entsprechende Entlüftungsvorrichtung auf fertigungs- bzw. prozesstechnisch zuverlässige Weise in das verfahrensgemäß herzustellende bzw. hergestellte Karosseriebauteil zu integrieren.

Im Zusammenhang mit der Anbringung eines entsprechenden Lüftungsklappenelements an den Grundkörper bestehen grundsätzlich zwei unterschiedliche Möglichkeiten, welche im Weiteren näher erläutert werden sollen.

Gemäß einer ersten Möglichkeit kann ein entsprechendes Lüftungsklappenelement unmittelbar an den Grundkörper angebracht werden bzw. im hergestellten Zustand des Karosseriebauteils unmittelbar an dem Grundkörper angebracht sein. Gemäß einer zweiten Möglichkeit kann ein entsprechendes Lüftungsklappenelement mittelbar, d. h. unter Zwischenschaltung wenigstens eines weiteren Bauteils, an den Grundkörper angebracht werden bzw. im hergestellten Zustand des Karosseriebauteils mittelbar an dem Grundkörper angebracht sein. Selbstverständlich ist es denkbar, dass an einem Grundkörper Lüftungsklappenelemente sowohl unmittelbar als auch mittelbar angebrachte angebracht werden; ein Karosseriebauteil kann also sowohl unmittelbar als auch mittelbar angebrachte Lüftungsklappenelemente umfassen.

Im Hinblick auf eine möglichst bauteilreduzierte Ausbildung bzw. Herstellung des Karosseriebauteils ist es zweckmäßig, entsprechende Lüftungsklappenelemente unmittelbar an dem Grundkörper anzubringen, da hierdurch auf entsprechende zwischen den Grundkörper und die jeweiligen Lüftungsklappenelemente geschaltete Bauteile verzichtet werden kann.

Neben der funktionell bzw. konstruktiv vergleichsweise einfachen Ausbildung einer Entlüftungsvorrichtung mit einem (einzigen) über ein (einziges) Lüftungsklappenelement reversibel verschließbaren Lüftungsöffnung, ist es möglich, Entlüftungsvorrichtungen mit mehreren Lüftungsöffnungen auszubilden.

Entsprechend können z. B. wenigstens zwei durch wenigstens einen, insbesondere steg- bzw. traversenartigen, Grundkörperabschnitt getrennte Öffnungen in dem Grundkörper ausgebildet bzw. bereitgestellt werden. Das Ausbilden der wenigstens zwei, typischerweise über-, unter- oder nebeneinander ausgebildeten, Öffnungen erfolgt durch einen Trennprozess derart, dass zwischen diesen ein gewisser Bereich des Grundkörpers verbleibt, welcher einen entsprechenden, insbesondere steg- bzw. traversenartigen, Grundkörperabschnitt bildet. Im Weiteren wird wenigstens ein Lüftungsklappenelement derart an den Grundkörper angebracht, dass es die wenigstens zwei grundkörperseitigen Öffnungen in einer Schließstellung reversibel verschließt, wobei es abschnittsweise an dem Grundkörperabschnitt anliegt. Das wenigstens eine Lüftungsklappenelement kann z. B. in einem einer der wenigstens zwei grundkörperseitigen Öffnungen benachbarten Randbereich des Grundkörpers angebracht werden. Ein entsprechender Grundkörperabschnitt bildet hier zumindest in der Schließstellung des Lüftungsklappenelements, in welchem das Lüftungsklappenelement die Lüftungsöffnungen reversibel verschließt, eine Anlagestelle für das wenigstens eine Lüftungsklappenelement.

Wiederum ausgehend von der Ausbildung bzw. Bereitstellung wenigstens zweier durch wenigstens einen, insbesondere steg- bzw. traversenartigen, Grundkörperabschnitt getrennten Öffnungen in dem Grundkörper, ist es auch denkbar, dass ein erstes Lüftungsklappenelement derart an den Grundkörper angebracht wird, dass es (nur) eine erste grundkörperseitige Öffnung in einer Schließstellung reversibel verschließt. Das erste Lüftungsklappenelement kann auch hier z. B. in einem der ersten grundkörperseitigen Öffnung benachbarten Randbereich des Grundkörpers angebracht werden. Wenigstens ein weiteres Lüftungsklappenelement wird derart an den wenigstens einen Grundkörperabschnitt angebracht, dass es die wenigstens eine weitere grundkörperseitige Öffnung in einer Schließstellung reversibel verschließt. Das Ausbilden der wenigstens zwei, typischerweise über-, unter- oder nebeneinander angeordneten, grundkörperseitigen Öffnungen erfolgt auch hier durch einen Trennprozess derart, dass zwischen diesen ein gewisser Bereich des Grundkörpers verbleibt, welcher einen entsprechenden, insbesondere steg- bzw. traversenartigen, Grundkörperabschnitt bildet. Im Weiteren wird hier jedoch nicht ein einziges Lüftungsklappenelement, welches die wenigstens zwei grundkörperseitigen Öffnungen in einer Schließstellung reversibel verschließt, sondern mehrere Lüftungsklappenelemente angebracht, welche jeweils eine bestimmte grundkörperseitige Öffnung reversibel verschließen. Ein entsprechender Grundkörperabschnitt kann hier zumindest in der Schließstellung eines ersten Lüftungsklappenelements, in welchem das Lüftungsklappenelement eine erste Lüftungsöffnung reversibel verschließt, eine Anlagestelle für das freie Ende des ersten Lüftungsklappenelements bilden. Gleichermaßen bildet ein entsprechender Grundkörperabschnitt eine Anbringungsstelle für wenigstens ein weiteres Lüftungsklappenelement.

Für den beispielhaften Fall dreier grundkörperseitiger Öffnungen, d. h. dreier Lüftungsöffnungen, ist es also möglich, dass ein erstes Lüftungsklappenelement an dem Grundkörper angebracht wird, derart, dass es eine erste grundkörperseitige Öffnung reversibel verschließt. Ein zweites Lüftungsklappenelement wird an einen ersten steg- bzw. traversenartigen Grundkörperabschnitt angebracht, derart, dass es eine zweite grundkörperseitige Öffnung in einer Schließstellung reversibel verschließt. Ein drittes Lüftungsklappenelement wird an einen zweiten steg- bzw. traversenartigen Grundkörperabschnitt angebracht, derart, dass es eine dritte grundkörperseitige Öffnung in einer Schließstellung reversibel verschließt. Das sich hieraus ergebende Prinzip lässt sich selbstverständlich beliebig fortsetzen. Allgemein gilt, dass, sofern mehrere Grundkörperabschnitte vorgesehen werden, diese Grundkörperabschnitte typischerweise parallel angeordnet bzw. ausgerichtet werden.

Die Art der Anbringung eines entsprechenden Lüftungsklappenelements an den Grundkörper oder einen entsprechenden Grundkörperabschnitt kann mittels wenigstens einer form- und/oder kraft- und/oder stoffschlüssigen Anbringungsart realisiert werden. Mit anderen Worten kann ein entsprechendes Lüftungsklappenelement mittels wenigstens einer form- und/oder kraft- und/oder stoffschlüssigen Anbringungsart unmittelbar an den Grundkörper oder an einen entsprechenden Grundkörperabschnitt angebracht werden. Die Anbringung eines Lüftungsklappenelements an dem Grundkörper respektive einem entsprechenden Grundkörperabschnitt bedeutet eine Befestigung des Lüftungsklappenelements an dem Grundkörper respektive dem Grundkörperabschnitt.

Das Anbringen eines entsprechenden Lüftungsklappenelements an den Grundkörper respektive einen entsprechenden Grundkörperabschnitt kann mittels einer stoffschlüssigen Anbringungsart z. B. über Anspritzen in einem Spritzgießprozess, erfolgen. Das Anbringen eines entsprechenden Lüftungsklappenelements kann dabei simultan mit der Ausbildung des Lüftungsklappenelements erfolgen. Wie eingangs erwähnt, ist ein entsprechendes Lüftungsklappenelement zumindest abschnittsweise aus einem weich-elastischen bzw. flexiblen Material gebildet. Ein entsprechendes Eigenschaftsspektrum aufweisende, spritzgießfähige Materialien sind z. B. thermoplastische Elastomere (TPE), wie Ethylen-Propylen-Dien-Kautschuk (EPDM). Das Anbringen eines Lüftungsklappenelements über Anspritzen erlaubt eine erhöhte Fertigungs- bzw. Prozessintegrität.

Das Anbringen eines entsprechenden Lüftungsklappenelements an den Grundkörper respektive einen entsprechenden Grundkörperabschnitt kann mittels einer stoffschlüssigen Anbringungsart auch über Anschweißen in einem Schweißprozess, insbesondere in einem Ultraschallschweißprozess, allgemein einem Kunststoffschweißprozess, erfolgen. Dies setzt selbstverständlich ein zumindest abschnittsweise aus einem schweißbaren Material gebildetes Lüftungsklappenelement wie auch einen zumindest abschnittsweise schweißbaren Grundkörper voraus, was insbesondere für den Fall, in welchem die das Fasergelege einbettende Kunststoffmatrix auf einem thermoplastischen Kunststoffmaterial basiert, gegeben ist. Das Anbringen eines Lüftungsklappenelements über Anschweißen erlaubt eine fertigungs- bzw. prozesstechnisch vergleichsweise einfache sowie ausgesprochen zuverlässige Anbringung eines Lüftungsklappenelements an den Grundkörper respektive einen entsprechenden Grundkörperabschnitt.

Das Anbringen eines entsprechenden Lüftungsklappenelements an den Grundkörper respektive einen entsprechenden Grundkörperabschnitt kann mittels einer stoffschlüssigen Anbringungsart auch über Ankleben in einem Klebeprozess erfolgen. Das Anbringen eines Lüftungsklappenelements über Ankleben erlaubt ebenso eine fertigungs- bzw. prozesstechnisch vergleichsweise einfache sowie ausgesprochen zuverlässige Anbringung eines Lüftungsklappenelements an den Grundkörper respektive einen entsprechenden Grundkörperabschnitt.

Als mögliche kraft- und/oder formschlüssige Anbringungsart eines entsprechenden Lüftungsklappenelements an den Grundkörper respektive einen entsprechenden Grundkörperabschnitt kommt z. B. ein Anprägen in einem Prägeprozess in Betracht. Als entsprechende Prägeprozesse können insbesondere Heißprägen, Ultraschallprägen, Spritzprägen (als Mischform zwischen einem Spritz- und einem Prägeprozess), etc. eingesetzt werden. Auch Prägeprozesse erlauben eine fertigungs- bzw. prozesstechnisch vergleichsweise einfache sowie ausgesprochen zuverlässige Anbringung eines Lüftungsklappenelements an den Grundkörper respektive einen entsprechenden Grundkörperabschnitt.

Als mögliche kraft- und/oder formschlüssige Anbringungsart eines entsprechenden Lüftungsklappenelements an den Grundkörper respektive einen entsprechenden Grundkörperabschnitt kommt auch ein Annieten in einem Nietprozess in Betracht. Als entsprechender Nietprozess kann beispielsweise Heißnieten eingesetzt werden, was wiederum eine fertigungs- bzw. prozesstechnisch vergleichsweise einfache sowie ausgesprochen zuverlässige Anbringung eines Lüftungsklappenelements an den Grundkörper respektive einen entsprechenden Grundkörperabschnitt erlaubt.

Weiterhin kommt als mögliche kraft- und/oder formschlüssige Anbringungsart eines entsprechenden Lüftungsklappenelements an den Grundkörper respektive einen entsprechenden Grundkörperabschnitt auch ein Verrasten bzw. Verklipsen in einem Verrastprozess in Betracht. In diesem Fall sind grundkörperseitig und lüftungsklappenelementseitig korrespondierende Rast-/Schnappelemente, d. h. z. B. Vorsprünge oder, insbesondere zumindest abschnittsweise hinterschnittene, Aufnahmen vorhanden, welche unter Ausbildung einer Rast-/Schnappverbindung zusammenwirken können und so ebenfalls eine ausgesprochen zuverlässige Anbringung eines Lüftungsklappenelements an den Grundkörper respektive einen entsprechenden Grundkörperabschnitt erlauben.

Selbstverständlich können mehrere unterschiedliche Anbringungsarten kombiniert werden, z. B. um eine besonders stabile Anbringung eines entsprechenden Lüftungsklappenelements an den Grundkörper respektive einen entsprechenden Grundkörperabschnitt zu ermöglichen.

Die oben erwähnte Möglichkeit einer mittelbaren Anbringung eines entsprechenden Lüftungsklappenelements an den Grundkörper kann z. B. dadurch realisiert werden, dass wenigstens ein Lüftungsklappenelement mittelbar über wenigstens eine Rahmenstruktur im Sinne eines entsprechend zwischen das Lüftungsklappenelement und den Grundkörper geschaltetes Bauteil an den Grundkörper angebracht wird. In diesem Fall wird typischerweise von wenigstens einer, insbesondere flächigen, Lage aus einem in einer thermoplastischen Kunststoffmatrix eingebetteten Fasergelege zur Ausbildung des oder eines Teils des Grundkörpers ausgegangen. Eine entsprechende Rahmenstruktur wird an, in oder im Bereich einer grundkörperseitigen Öffnung angebracht. Wenigstens ein Lüftungsklappenelement ist bzw. wird an die Rahmenstruktur angebracht. Eine entsprechende Rahmenstruktur umfasst wenigstens einen, insbesondere steg- bzw. traversenartigen, Rahmenabschnitt und wenigstens eine einen Teil der entlüftungsvorrichtungsseitigen Lüftungsöffnung bildende Durchbrechung.

Auch hier ist es neben der funktionell bzw. konstruktiv vergleichsweise einfachen Ausbildung einer Entlüftungsvorrichtung mit einer (einzigen) über ein (einziges) Lüftungsklappenelement reversibel verschließbaren rahmenstrukturseitigen Durchbrechung respektive Lüftungsöffnung möglich, Entlüftungsvorrichtungen mit mehreren rahmenstrukturseitigen Durchbrechungen respektive Lüftungsöffnungen auszubilden.

Entsprechend können also z. B. wenigstens zwei durch wenigstens einen, insbesondere steg- bzw. traversenartigen, Rahmenabschnitt getrennte Durchbrechungen in der Rahmenstruktur und entsprechende Öffnungen in dem Grundkörper vorgesehen werden. Im Weiteren wird wenigstens ein Lüftungsklappenelement derart an die Rahmenstruktur angebracht, dass es die wenigstens zwei rahmenstrukturseitigen Durchbrechungen wie auch die grundkörperseitigen Öffnungen in einer Schließstellung reversibel verschließt, wobei es abschnittsweise an dem Rahmenabschnitt anliegt. Das wenigstens eine Lüftungsklappenelement kann z. B. in einem einer der wenigstens zwei rahmenstrukturseitigen Durchbrechungen benachbarten Randbereich der Rahmenstruktur angebracht werden. Ein entsprechender Rahmenabschnitt bildet hier zumindest in der Schließstellung des Lüftungsklappenelements, in welchem das Lüftungsklappenelement die rahmenstrukturseitigen Durchbrechungen wie auch die Lüftungsöffnungen reversibel verschließt, eine Anlagestelle für das wenigstens eine Lüftungsklappenelement.

Wiederum ausgehend von der Ausbildung wenigstens zweier durch wenigstens einen, insbesondere steg- bzw. traversenartigen, Rahmenabschnitt getrennten Durchbrechungen in der Rahmenstruktur, ist es auch denkbar, dass ein erstes Lüftungsklappenelement derart an die Rahmenstruktur angebracht wird, dass es (nur) eine erste rahmenstrukturseitige Durchbrechung in einer Schließstellung reversibel verschließt. Das erste Lüftungsklappenelement kann auch hier z. B. in einem der ersten rahmenstrukturseitigen Durchbrechung benachbarten Randbereich der Rahmenstruktur angebracht werden. Wenigstens ein weiteres Lüftungsklappenelement wird derart an den wenigstens einen Rahmenabschnitt angebracht, dass es die wenigstens eine weitere rahmenstrukturseitige Durchbrechung in einer Schließstellung reversibel verschließt. Hier wird also ebenso nicht ein einziges Lüftungsklappenelement, welches die wenigstens zwei rahmenstrukturseitigen Durchbrechungen in einer Schließstellung reversibel verschließt, sondern mehrere Lüftungsklappenelemente angebracht, welche jeweils eine bestimmte rahmenstrukturseitige Durchbrechung reversibel verschließen. Ein entsprechender Rahmenabschnitt kann hier zumindest in der Schließstellung eines ersten Lüftungsklappenelements, in welchem das Lüftungsklappenelement eine rahmenstrukturseitige Durchbrechung bzw. eine erste Lüftungsöffnung reversibel verschließt, eine Anlagestelle für das freie Ende des ersten Lüftungsklappenelements bilden. Gleichermaßen bildet ein entsprechender Rahmenabschnitt eine Anbringungsstelle für wenigstens ein weiteres Lüftungsklappenelement.

Die Art der Anbringung eines entsprechenden Lüftungsklappenelements an eine entsprechende Rahmenstruktur oder einen entsprechenden Rahmenabschnitt kann auch hier mittels wenigstens einer form- und/oder kraft- und/oder stoffschlüssigen Anbringungsart realisiert werden. Mit anderen Worten kann ein entsprechendes Lüftungsklappenelement mittels wenigstens einer form- und/oder kraft- und/oder stoffschlüssigen Anbringungsart an die Rahmenstruktur oder an einen entsprechenden Rahmenabschnitt angebracht werden. Die Anbringung eines Lüftungsklappenelements an der Rahmenstruktur respektive einem entsprechenden Rahmenabschnitt bedeutet eine Befestigung des Lüftungsklappenelements an der Rahmenstruktur respektive dem Rahmenabschnitt.

Analoges gilt für die Anbringung einer entsprechenden Rahmenstruktur an den Grundkörper. Das Anbringen der wenigstens einen Rahmenstruktur an den Grundkörper kann also ebenfalls mittels wenigstens einer form- und/oder kraft- und/oder stoffschlüssigen Anbringungsart erfolgen.

Sowohl im Zusammenhang mit der Anbringung eines entsprechenden Lüftungsklappenelements an eine entsprechende Rahmenstruktur oder einen entsprechenden Rahmenabschnitt als auch im Zusammenhang mit der Anbringung einer entsprechenden Rahmenstruktur an den Grundkörper gelten die Ausführungen im Zusammenhang mit der unmittelbaren Anbringung eines entsprechenden Lüftungsklappenelements an den Grundkörper respektive einen Grundkörperabschnitt analog. Mithin kann auch hier z. B. ein Anspritzen, Anschweißen, Ankleben, Anprägen, Annieten oder ein Verrasten bzw. Verklipsen eingesetzt werden.

In allen Fällen kann ein entsprechendes Lüftungsklappenelement zwei funktional unterschiedliche Bereiche, nämlich einen Anbringungsbereich und einen Klappenbereich, aufweisen. Im Zusammenhang mit der unmittelbaren Anbringung eines entsprechenden Lüftungsklappenelements an den Grundkörper kann ein Lüftungsklappenelement also mit einem Anbringungsbereich zur Anbringung des Lüftungsklappenelements an den Grundkörper oder an einen entsprechenden Grundkörperabschnitt und einem Klappenbereich zum reversiblen Verschließen der wenigstens einen oder wenigstens einer grundkörperseitigen Öffnung vorgesehen werden. Hierbei wird das Lüftungsklappenelement über den wenigstens einen Anbringungsbereich form- und/oder kraft- und/oder stoffschlüssig an den Grundkörper oder an einen entsprechenden Grundkörperabschnitt angebracht, derart, dass es mit dem Klappenbereich die wenigstens eine grundkörperseitige Öffnung zumindest abschnittsweise verschließt. Während der Klappenbereich typischerweise aus einem weich-elastischen bzw. flexiblen Material, wie z. B. einem TPE, gebildet ist, ist der Anbringungsbereich typischerweise aus einem steifen bzw. starren Material, wie z. B. einem thermoplastischen Kunststoffmaterial, z. B. PA, PE, PP, gebildet.

Entsprechend kann im Zusammenhang mit der mittelbaren Anbringung eines entsprechenden Lüftungsklappenelements an eine Rahmenstruktur ein mit einem Anbringungsbereich zur Anbringung des Lüftungsklappenelements an der Rahmenstruktur oder an einen entsprechenden Rahmenabschnitt und einem Klappenbereich zum reversiblen Verschließen der wenigstens einen oder wenigstens einer rahmenstrukturseitigen Durchbrechung vorgesehen werden. Hierbei wird das Lüftungsklappenelement über den wenigstens einen Anbringungsbereich form- und/oder kraft- und/oder stoffschlüssig an die Rahmenstruktur oder an einen entsprechenden Rahmenabschnitt angebracht, derart, dass es mit dem Klappenbereich die wenigstens eine rahmenstrukturseitige Öffnung zumindest abschnittsweise verschließt. Auch hier ist der Klappenbereich typischerweise aus einem weich-elastischen bzw. flexiblen Material, wie z. B. einem TPE, und der Anbringungsbereich typischerweise aus einem steifen bzw. starren Material, wie z. B. einem thermoplastischen Kunststoffmaterial, z. B. PA, PE, PP, gebildet.

Im Folgenden werden weitere, insbesondere in fertigungs- bzw. prozesstechnischer Hinsicht, vorteilhafte Ausführungsformen des Verfahrens beschrieben.

Es ist z. B. möglich, dass vor, nach oder gemeinsam mit dem Ausbilden der wenigstens einen Öffnung in dem Grundkörper zur Ausbildung der wenigstens einen Lüftungsöffnung wenigstens ein Konfektionierungsprozess zur Konfektionierung der bereitgestellten wenigstens einen Lage des in einer Kunststoffmatrix eingebetteten Fasergeleges in eine dem herzustellenden Karosseriebauteil entsprechende oder für dessen Herstellung geeignete Formkontur erfolgt bzw. durchgeführt wird. Wie weiter oben erwähnt, ist es zwar möglich, dass die wenigstens eine bereitgestellte Lage des in einer Kunststoffmatrix eingebetteten Fasergeleges bereits im Hinblick auf die Form und Geometrie des herzustellenden Karosseriebauteils konfektioniert, d. h. insbesondere mit entsprechenden geometrischen Abmessungen, vorliegt. Dies ist jedoch nicht zwingend notwendig, da eine entsprechende Konfektionierung insbesondere auch simultan mit der Ausbildung der grundkörperseitigen Öffnungen erfolgen kann. Mit anderen Worten können in wenigstens einem gemeinsamen Prozess sowohl die grundkörperseitigen Öffnungen, sofern in dem Grundkörper nicht ursprünglich vorhanden, gebildet als auch eine entsprechende Konfektionierung des Grundkörpers bzw. der bereitgestellten wenigstens einen Lage des in einer Kunststoffmatrix eingebetteten Fasergeleges in eine dem herzustellenden Karosseriebauteil entsprechende oder für dessen Herstellung geeignete Formkontur durchgeführt werden. Dies kann z. B. über weiter oben im Zusammenhang mit der Ausbildung entsprechender grundkörperseitiger Öffnungen genannte Stanz- bzw. Schneidprozesse erfolgen. Selbstverständlich ist es prinzipiell auch möglich, eine entsprechende Konfektionierung vor bzw. nach der Ausbildung entsprechender grundkörperseitigen Öffnungen vorzunehmen.

Zudem ist es möglich, dass vor, nach oder gemeinsam mit dem Ausbilden der wenigstens einen Öffnung in dem Grundkörper zur Ausbildung der wenigstens einen Lüftungsöffnung wenigstens ein Umformprozess des Grundkörpers, insbesondere in eine dem herzustellenden Karosseriebauteil entsprechende dreidimensionale Bauteilgeometrie, erfolgt bzw. durchgeführt wird. Es ist also möglich, in wenigstens einem gemeinsamen Prozess sowohl die grundkörperseitigen Öffnungen, sofern in dem Grundkörper nicht ursprünglich vorhanden, auszubilden als auch eine Formgebung des Grundkörpers bzw. der bereitgestellten wenigstens einen Lage des in einer Kunststoffmatrix eingebetteten Fasergeleges in eine dem herzustellenden Karosseriebauteil entsprechende dreidimensionale Bauteilgeometrie durchzuführen. Letzteres kann über simultane Umformprozesse, wie z. B. Biegen, Tiefziehen, Pressen, etc. erfolgen. Selbstverständlich ist es prinzipiell auch möglich, eine entsprechende Formgebung vor bzw. nach der Ausbildung entsprechender grundkörperseitiger Öffnungen vorzunehmen.

Außerdem ist es möglich, dass vor, nach oder gemeinsam mit dem Ausbilden der wenigstens einen Öffnung in dem Grundkörper zur Ausbildung der wenigstens einen Lüftungsöffnung ein zumindest abschnittsweises Erwärmen des Grundkörpers erfolgt bzw. durchgeführt wird. Ein Erwärmen des Grundkörpers kann die Ausbildung entsprechender Öffnungen erleichtern, da die Kunststoffmatrix bedingt durch den Temperatureintrag zu einem Erweichen gebracht wird. Gleichermaßen kann eine Erwärmung des Grundkörpers einen Abbau von, z. B. umformungsbedingten, mechanischen Spannungen in dem Grundkörper bedingen. Die Erwärmungstemperatur sollte hierbei grundsätzlich in Abhängigkeit der chemischen bzw. physikalischen Eigenschaften der Kunststoffmatrix gewählt werden, um die Kunststoffmatrix durch einen übergebührenden Temperatureintrag nicht strukturell zu beschädigen. Bei einer aus einem (amorphen) thermoplastischen Kunststoffmaterial gebildeten Kunststoffmatrix sollte die Erwärmungstemperatur im Bereich bzw. leicht oberhalb einer Glasübergangstemperatur des Kunststoffmaterials liegen. Die Erwärmung kann z. B. durch energiereiche Strahlung, insbesondere Infrarot-Strahlung, oder eine geeignete Temperierung der zur Durchführung des Verfahrens verwendeten Vorrichtung bzw. Einrichtungen realisiert werden.

Die Erfindung betrifft ferner eine Vorrichtung zur Herstellung eines Karosseriebauteils für ein Kraftfahrzeug, welches Karosseriebauteil aus einem in einer Kunststoffmatrix eingebetteten Fasergelege gebildeten Grundkörper gebildet ist und wenigstens eine Entlüftungsvorrichtung, insbesondere zur Entlüftung eines Innenraums des Kraftfahrzeugs, umfasst, welche Entlüftungsvorrichtung wenigstens eine über wenigstens ein Lüftungsklappenelement reversibel verschließbare Lüftungsöffnung umfasst. Die Vorrichtung umfasst:
- wenigstens eine (erste) Einrichtung zum Bereitstellen wenigstens einer, insbesondere flächigen, Lage eines in einer Kunststoffmatrix eingebetteten Fasergeleges zur Ausbildung des oder eines Teils des Grundkörpers und zum Ausbilden wenigstens einer Öffnung in wenigstens eine bereitgestellte, insbesondere flächige, Lage eines in einer Kunststoffmatrix eingebetteten Fasergeleges zur Ausbildung des oder eines Teils des oder eines Grundkörpers des Karosseriebauteils, oder
- wenigstens eine (erste) Einrichtung zum Bereitstellen wenigstens einer, insbesondere flächigen, Lage eines in einer Kunststoffmatrix eingebetteten Fasergeleges mit wenigstens einer Öffnung zur Ausbildung des oder eines Teils des Grundkörpers des Karosseriebauteils mit wenigstens einer Lüftungsöffnung, und
- wenigstens eine (zweite) Einrichtung zum Anbringen wenigstens eines Lüftungsklappenelements an den oder einen Grundkörper derart, dass dieses die oder wenigstens eine grundkörperseitig gebildete Öffnung zumindest abschnittsweise verschließt, zur Ausbildung der Entlüftungsvorrichtung.

Die oder eine erste Einrichtung kann z. B. als eine Förder- und/oder Trenneinrichtung, insbesondere zur Durchführung von Förder- und/oder Stanz- und/oder Schneidprozessen, ausgebildet sein oder wenigstens eine solche umfassen. Die oder eine zweite Einrichtung kann z. B. als eine Spritzgießeinrichtung, Schweißeinrichtung, insbesondere Ultraschallschweißeinrichtung, Klebeeinrichtung, Prägeeinrichtung, insbesondere Heißprägeeinrichtung, oder Nieteinrichtung ausgebildet sein oder wenigstens eine solche umfassen.

Die Vorrichtung ist insbesondere zur Durchführung des beschriebenen Verfahrens ausgebildet bzw. eingerichtet, so dass sämtliche Ausführungen im Zusammenhang mit dem Verfahren analog für die Vorrichtung gelten.

Zudem betrifft die Erfindung ein gemäß dem beschriebenen Verfahren hergestelltes Karosseriebauteil. Auch für das Karosseriebauteil gelten sämtliche Ausführungen im Zusammenhang mit dem Verfahren analog.

Weitere Vorteile, Merkmale und Einzelheiten der Erfindung ergeben sich aus den im Folgenden beschriebenen Ausführungsbeispielen sowie anhand der Zeichnungen. Dabei zeigen:
Fig. 1 - 5 je eine Prinzipdarstellung eines Karosseriebauteils gemäß einem Ausführungsbeispiel der Erfindung; und
Fig. 6 - 9 je eine Prinzipdarstellung zur Veranschaulichung verschiedener Schritte eines Verfahrens gemäß einem Ausführungsbeispiel der Erfindung.

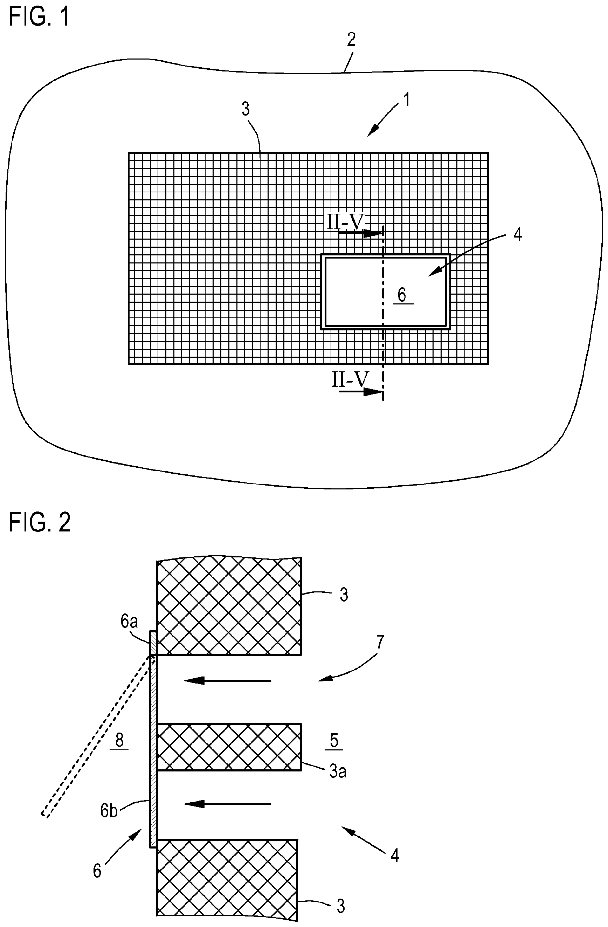

Die Fig. 1 - 5 zeigen je eine Prinzipdarstellung eines Karosseriebauteils 1 gemäß einem Ausführungsbeispiel der Erfindung. Ersichtlich zeigt Fig. 1 eine Seitenansicht eines Karosseriebauteils 1 in einem ordnungsgemäß an einem Kraftfahrzeug 2, z. B. im Bereich des Hecks, verbauten Zustand und die Fig. 2 bis 5 jeweils eine Schnittansicht entlang der in Fig. 1 gezeigten Schnittlinien II - V.

Das Karosseriebauteil 1 umfasst einen Grundkörper 3 aus einem in einer Kunststoffmatrix eingebetteten Fasergelege. Bei dem Karosseriebauteil 1 handelt es sich somit dem Grunde nach um ein aus einem Faserverbundmaterial bzw. Kompositmaterial gebildetes Faserverbundbauteil bzw. Kompositbauteil.

Bei einem entsprechenden Kompositmaterial kann es sich z. B. um ein in einem ein- oder mehrlagigen Gelege in einer bestimmten Ausrichtung und Orientierung angeordneten Fasermaterial, welches von einer thermoplastischen Kunststoffmatrix umgeben, mithin in eine thermoplastische Kunststoffmatrix eingebettet ist, handeln. Als Fasermaterialien werden typischerweise Glas- und/oder Kohlefasern eingesetzt. Als thermoplastische Kunststoffmatrix kommt im Allgemeinen ein thermoplastisches Kunststoffmaterial, z. B. Polyamid, Polyethylen oder Polypropylen, etc. zum Einsatz. Alternativ zu einem in einer thermoplastischen Kunststoffmatrix eingebetteten Fasergelege käme auch ein in einer duroplastischen, d. h. z. B. auf einem Epoxidharz basierenden, Kunststoffmatrix eingebettetes Fasergelege in Frage.

Das Karosseriebauteil 1 umfasst wenigstens eine Entlüftungsvorrichtung 4, welche der Entlüftung eines Innenraums 5 des Kraftfahrzeugs 2 dient. Eine entsprechende Entlüftungsvorrichtung 4 ist sonach in das Karosseriebauteil 1 integriert. Eine entsprechende Entlüftungsvorrichtung 4 umfasst wenigstens eine von wenigstens einem Lüftungsklappenelement 6 reversibel verschließbare Lüftungsöffnung 7. Unter einem reversiblen Verschluss einer entsprechenden Lüftungsöffnung 7 ist zu verstehen, dass das Lüftungsklappenelement 6 bei entsprechendem Druckunterschied, insbesondere zwischen dem Innenraum 5 und dem Außenraum 8 des Kraftfahrzeugs 2, zumindest abschnittsweise derart relativ zu der oder einer Lüftungsöffnung 7 bewegbar, insbesondere verschwenkbar, ist, dass es die Lüftungsöffnung 7 nicht mehr verschließt, so dass ein Luft, typischerweise zum Zwecke des Ausgleichs eines entsprechenden Druckunterschieds aus dem Innenraum 5 in den Außenraum 8 des Kraftfahrzeugs 2 ausströmen kann, wie in Fig. 2 durch die Pfeile angedeutet. Ein entsprechendes Lüftungsklappenelement 6 ist zumindest abschnittsweise aus einem weich-elastischen bzw. flexiblen Material, wie z. B. einem thermoplastischen Elastomer, gebildet.

Anhand der in den Fig. 2 bis 5 gezeigten Ausführungsbeispiele lassen sich unterschiedliche Möglichkeiten der Ausbildung einer entsprechenden Entlüftungsvorrichtung 4, d. h. insbesondere auch der Anbringung entsprechender Lüftungsklappenelemente 6, an dem Grundkörper 3 des Karosseriebauteils 1 erkennen. Wie sich aus den in den Fig. 2 bis 5 gezeigten Ausführungsbeispielen ergibt, bestehen im Zusammenhang mit der Anbringung entsprechender Lüftungsklappenelements 6 an den Grundkörper 3 grundsätzlich zwei unterschiedliche Möglichkeiten.

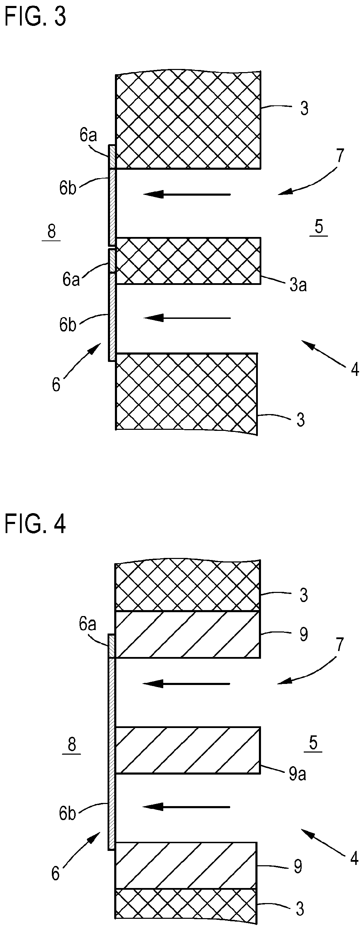

Gemäß einer in den in den Fig. 2, 3 gezeigten Ausführungsbeispielen dargestellten ersten Möglichkeit sind entsprechende Lüftungsklappenelemente 6 unmittelbar an dem Grundkörper 3 des Karosseriebauteils 1 angebracht.

Neben der funktionell bzw. konstruktiv vergleichsweise einfachen Ausbildung einer Entlüftungsvorrichtung 4 mit einem (einzigen) über ein (einziges) Lüftungsklappenelement 6 reversibel verschließbaren Lüftungsöffnung 7, ist es möglich, Entlüftungsvorrichtungen 4 mit mehreren Lüftungsöffnungen 7 auszubilden.

In dem in Fig. 2 gezeigten Ausführungsbeispiel sind beispielsweise zwei durch wenigstens einen, insbesondere steg- bzw. traversenartigen, Grundkörperabschnitt 3a getrennte Öffnungen bzw. Lüftungsöffnungen 7 in dem Grundkörper 3 ausgebildet. Das Ausbilden der wenigstens zwei, hier übereinander angeordneten, Öffnungen erfolgt durch einen Trennprozess derart, dass zwischen diesen ein gewisser Bereich des Grundkörpers 3 verbleibt, welcher den Grundkörperabschnitt 3a bildet. Im Weiteren wird ein Lüftungsklappenelement 6 derart an den Grundkörper 3 angebracht, dass es die wenigstens zwei grundkörperseitigen Öffnungen in der Schließstellung reversibel verschließt, wobei es abschnittsweise an dem Grundkörperabschnitt 3a anliegt. Das Lüftungsklappenelement 6 ist in einem einer der wenigstens zwei grundkörperseitigen Öffnungen benachbarten Randbereich des Grundkörpers 3 angebracht. Der Grundkörperabschnitt 3a bildet zumindest in der Schließstellung des Lüftungsklappenelements 6 eine Anlagestelle für das Lüftungsklappenelement 6. Die Offenstellung des Lüftungsklappenelements 6 ist in Fig. 2 exemplarisch strichliert dargestellt.

In dem in Fig. 3 gezeigten Ausführungsbeispiel sind ebenso zwei durch wenigstens einen, insbesondere steg- bzw. traversenartigen, Grundkörperabschnitt 3a getrennte Öffnungen bzw. Lüftungsöffnungen 7 in dem Grundkörper 3 gebildet. Im Unterschied zu Fig. 2 ist ein erstes Lüftungsklappenelement 6 derart an den Grundkörper 3 angebracht, dass es (nur) eine erste grundkörperseitige Öffnung in der Schließstellung reversibel verschließt. Das erste Lüftungsklappenelement 6 ist in einem der ersten grundkörperseitigen Öffnung benachbarten Randbereich des Grundkörpers 3 angebracht. Ein weiteres Lüftungsklappenelement 6 ist derart an den wenigstens einen Grundkörperabschnitt 3a angebracht, dass es die weitere grundkörperseitige Öffnung in der Schließstellung reversibel verschließt. Das Ausbilden der beiden Öffnungen erfolgt auch hier durch einen Trennprozess derart, dass zwischen diesen ein gewisser Bereich des Grundkörpers 3 verbleibt, welcher den Grundkörperabschnitt 3a bildet. Im Weiteren wird im Gegensatz zu dem in Fig. 2 gezeigten Ausführungsbeispiel jedoch nicht ein einziges Lüftungsklappenelement 6, welches die beiden grundkörperseitigen Öffnungen reversibel verschließt, sondern mehrere Lüftungsklappenelemente 6 angebracht, welche jeweils eine bestimmte grundkörperseitige Öffnung reversibel verschließen. Der Grundkörperabschnitt 3a bildet zumindest in der Schließstellung des ersten Lüftungsklappenelements 6 eine Anlagestelle für das freie Ende des ersten Lüftungsklappenelements 6. Gleichermaßen bildet der Grundkörperabschnitt 3a eine Anbringungsstelle für das weitere Lüftungsklappenelement 6.

Die Art der Anbringung entsprechender Lüftungsklappenelemente 6 an den Grundkörper 3 oder einen entsprechenden Grundkörperabschnitt 3a ist mittels wenigstens einer form- und/oder kraft- und/oder stoffschlüssigen Anbringungsart realisiert. Das Anbringen entsprechender Lüftungsklappenelemente 6 an den Grundkörper 3 respektive einen entsprechenden Grundkörperabschnitt 3a kann mittels einer stoffschlüssigen Anbringungsart z. B. über Anspritzen in einem Spritzgießprozess, erfolgen. Das Anbringen eines entsprechenden Lüftungsklappenelements 6 kann dabei simultan mit der Ausbildung des Lüftungsklappenelements 6 erfolgen. In diesem Zusammenhang ist es zweckmäßig, wenn ein entsprechendes Lüftungsklappenelement 6 aus einem spritzgießfähigen thermoplastischen Elastomer (TPE), wie Ethylen-Propylen-Dien-Kautschuk (EPDM), gebildet wird.

Andere Möglichkeiten der Anbringung entsprechender Lüftungsklappenelemente 6 an den Grundkörper 3 respektive einen entsprechenden Grundkörperabschnitt 3 sind weiter oben genannt und umfassen z. B. ein Anschweißen, Ankleben, Anprägen, Annieten oder Verrasten bzw. Verklipsen.

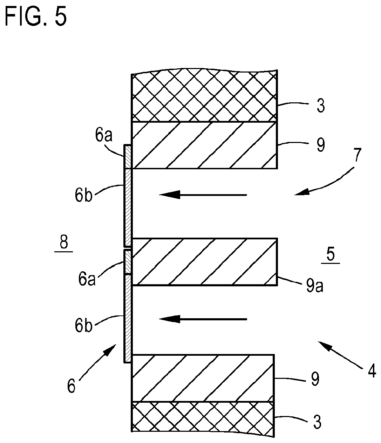

Gemäß einer in den in den Fig. 4, 5 gezeigten Ausführungsbeispielen dargestellten zweiten Möglichkeit ist ein entsprechendes Lüftungsklappenelement 6 mittelbar, d. h. unter Zwischenschaltung wenigstens eines weiteren Bauteils, an dem Grundkörper 3 des Karosseriebauteils 1 angebracht. Hierbei wird von einem aus einem in einer thermoplastischen Kunststoffmatrix, z. B. basierend auf Polypropylen, eingebetteten Fasergelege gebildeten Grundkörper 3 ausgegangen.

Dies ist dadurch realisiert, dass entsprechende Lüftungsklappenelemente 6 mittelbar über wenigstens eine Rahmenstruktur 9 im Sinne eines entsprechend zwischen ein Lüftungsklappenelement 6 und den Grundkörper 3 geschaltetes Bauteil an den Grundkörper 3 angebracht sind. Eine entsprechende Rahmenstruktur 9 ist an, in oder im Bereich einer grundkörperseitigen Öffnung angebracht. Wenigstens ein Lüftungsklappenelement 6 ist bzw. wird an die Rahmenstruktur 9 angebracht. Eine entsprechende Rahmenstruktur 9 umfasst wenigstens einen steg- bzw. traversenartigen Rahmenabschnitt 9a und wenigstens eine einen Teil der entlüftungsvorrichtungsseitigen Lüftungsöffnung 7 bildende Durchbrechung 10.

Auch hier ist es neben der funktionell bzw. konstruktiv vergleichsweise einfachen Ausbildung einer Entlüftungsvorrichtung 4 mit einer (einzigen) über ein (einziges) Lüftungsklappenelement 6 reversibel verschließbaren rahmenstrukturseitigen Durchbrechung 10 respektive Lüftungsöffnung 7 möglich, Entlüftungsvorrichtungen 4 mit mehreren rahmenstrukturseitigen Durchbrechungen 10 respektive Lüftungsöffnungen 7 auszubilden.

In dem in Fig. 4 gezeigten Ausführungsbeispiel sind zwei durch wenigstens einen steg- bzw. traversenartigen Rahmenabschnitt 9a getrennte Durchbrechungen 10 in der Rahmenstruktur 9 und entsprechende Öffnungen in dem Grundkörper 3 vorgesehen. Ein Lüftungsklappenelement 6 ist derart an die Rahmenstruktur 9 angebracht, dass es die beiden rahmenstrukturseitigen Durchbrechungen 10 wie auch die grundkörperseitigen Öffnungen in einer Schließstellung reversibel verschließt, wobei es abschnittsweise an dem Rahmenabschnitt 9a anliegt. Das Lüftungsklappenelement 6 ist in einem einer rahmenstrukturseitigen Durchbrechung 10 benachbarten Randbereich der Rahmenstruktur 9 angebracht. Der Rahmenabschnitt 9 bildet zumindest in der Schließstellung des Lüftungsklappenelements 6 eine Anlagestelle für das Lüftungsklappenelement 6.

In dem in Fig. 5 gezeigten Ausführungsbeispiel sind ebenso zwei durch einen steg- bzw. traversenartigen Rahmenabschnitt 9 getrennte Durchbrechungen 10 in der Rahmenstruktur 9 gebildet. Im Unterschied zu Fig. 4 ist ein erstes Lüftungsklappenelement 6 derart an die Rahmenstruktur 9 angebracht, dass es (nur) eine erste rahmenstrukturseitige Durchbrechung 10 in der Schließstellung reversibel verschließt. Das erste Lüftungsklappenelement 6 ist in einem der ersten rahmenstrukturseitigen Durchbrechung 10 benachbarten Randbereich der Rahmenstruktur 9 angebracht. Ein weiteres Lüftungsklappenelement 6 ist derart an den wenigstens einen Rahmenabschnitt 9a angebracht, dass es die weitere rahmenstrukturseitige Durchbrechung 10 in der Schließstellung reversibel verschließt. Analog zu dem in Fig. 3 gezeigten Ausführungsbeispiel wird ebenso nicht ein einziges Lüftungsklappenelement 6, welches die beiden rahmenstrukturseitigen Durchbrechungen 10 in der Schließstellung reversibel verschließt, sondern mehrere Lüftungsklappenelemente 6 angebracht, welche jeweils eine bestimmte rahmenstrukturseitige Durchbrechung 10 reversibel verschließen. Ein entsprechender Rahmenabschnitt 9a bildet zumindest in der Schließstellung des ersten Lüftungsklappenelements 6 eine Anlagestelle für das freie Ende des ersten Lüftungsklappenelements 6. Gleichermaßen bildet der Rahmenabschnitt 9a eine Anbringungsstelle für das weitere Lüftungsklappenelement 6.

Die Art der Anbringung entsprechender Lüftungsklappenelemente 6 an eine entsprechende Rahmenstruktur 9 oder einen entsprechenden Rahmenabschnitt 9a ist auch hier mittels wenigstens einer form- und/oder kraft- und/oder stoffschlüssigen Anbringungsart realisiert. Analoges gilt für die Anbringung einer entsprechenden Rahmenstruktur 9 an den Grundkörper 3.

Wenngleich allein bei dem in Fig. 1 gezeigten Ausführungsbeispiel dargestellt, können entsprechende Lüftungsklappenelemente 6 zwei funktional unterschiedliche Bereiche, nämlich einen Anbringungsbereich 6a und einen Klappenbereich 6b, aufweisen. Der Anbringungsbereich 6a dient der Anbringung des Lüftungsklappenelements 6 an den Grundkörper 3 respektive an eine Rahmenstruktur 9. Der Klappenbereich 6b dient zum reversiblen Verschließen entsprechender Lüftungsöffnungen 7. Während der Klappenbereich 6b aus einem weich-elastischen bzw. flexiblen Material, wie z. B. einem TPE, gebildet ist, ist der Anbringungsbereich 6b aus einem steifen bzw. starren Material, wie z. B. einem thermoplastischen Kunststoffmaterial, z. B. PA, PE, PP, gebildet.

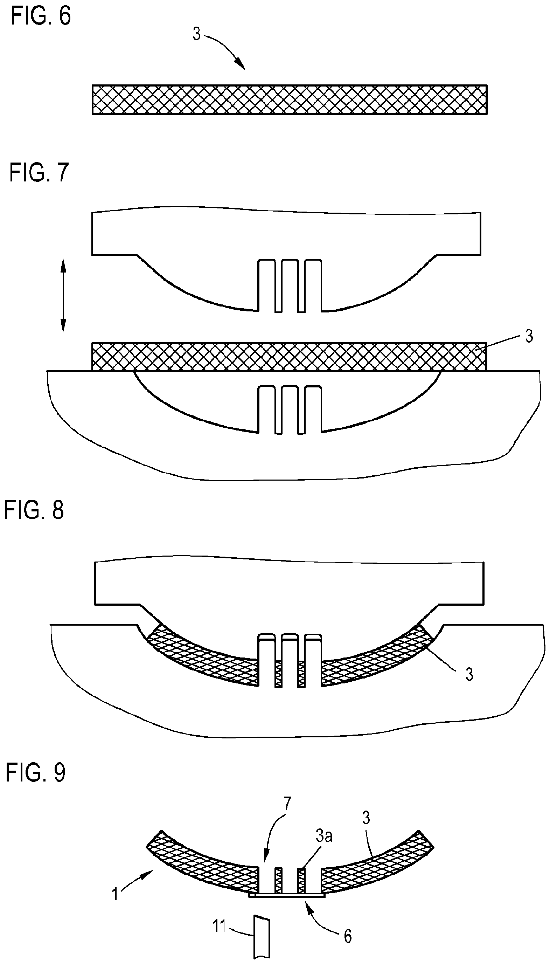

Anhand der Fig. 6 bis 9 wird im Weiteren ein Ausführungsbeispiel eines Verfahrens zur Herstellung eines entsprechenden Karosseriebauteils 1 beschrieben.

In einem in Fig. 6 dargestellten ersten Schritt des Verfahrens wird zur Ausbildung des oder eines Teils des Grundkörpers 3 des späteren Karosseriebauteils 1 ein Halbzeug in Form wenigstens einer flächige Lage eines in einer Kunststoffmatrix eingebetteten Fasergeleges bereitgestellt. Die wenigstens eine bereitgestellte Lage des in einer Kunststoffmatrix eingebetteten Fasergeleges kann bereits im Hinblick auf die Form und Geometrie des herzustellenden Karosseriebauteils 1 konfektioniert, d. h. insbesondere mit entsprechenden geometrischen Abmessungen, vorliegen.

In einem in den Fig. 7, 8 dargestellten zweiten Schritt des Verfahrens werden zur Ausbildung entsprechender Lüftungsöffnungen 7 der Entlüftungsvorrichtung 4 des späteren Karosseriebauteils 1 in dem Grundkörper 3 Öffnungen bzw. Durchbrechungen ausgebildet. Die Ausbildung entsprechenden Öffnungen erfolgt mittels eines Trennprozesses, d. h. eines Stanzprozesses, in welchem bestimmte Teile des Grundkörpers 3 mechanisch von übrigen Teilen des Grundkörpers 3 unter Ausbildung entsprechender grundkörperseitiger Öffnungen entfernt werden. Hierfür wird ein nicht näher bezeichnetes, im Wesentlichen zweiteiliges Stanzwerkzeug mit hier in einem unteren Werkzeugteil ausgebildeten dornartigen Stanzelementen verwendet. In dem oberen Werkzeugteil sind zu den dornartigen Stanzelementen korrespondiere Ausnehmungen gebildet. In dem in den Fig. 7, 8 gezeigten Ausführungsbeispiel werden in dem Grundkörper 3 Öffnungen mit einer runden bzw. rundlichen, d. h. ellipsoiden bzw. ovalen, Form ausgebildet.

Die Größe entsprechender grundkörperseitig gebildeter Öffnungen kann zwischen wenigen Millimetern und einigen Zentimetern liegen. Die in den Fig. 7, 8 gebildeten runden Öffnungen können einen Durchmesser von z. B. 1 cm aufweisen. Insbesondere bei im Vergleich kleinen Öffnungen, d. h. Öffnungen unterhalb eines Durchmessers bzw. eine Kantenlänge von 3 mm, ist über die Anzahl und Anordnung der Öffnungen sicherzustellen, dass die Funktionsfähigkeit der Entlüftungsvorrichtung 4 gegeben ist. Eine hierfür geeignete Anordnung wäre z. B. eine matrixartige Anordnung in der eine Vielzahl entsprechender Öffnungen, vorzugsweise eng benachbart, in einer Vielzahl an Reihen und Spalten gebildet wird.

In einem in Fig. 9 dargestellten dritten Schritt des Verfahrens wird zur Ausbildung der Entlüftungsvorrichtung 4 ein Lüftungsklappenelement 6 an den Grundkörper 3 angebracht. Die Anbringung des wenigstens einen Lüftungsklappenelements 6 erfolgt derart, dass dieses die grundkörperseitig gebildeten Öffnungen zumindest abschnittsweise reversibel verschließt. Die Anbringung des Lüftungsklappenelements 6 an den Grundkörper 3 erfolgt z. B. mit einem Prägewerkzeug 11, d. h. durch ein Anprägen in einem Prägeprozess. Alternative Anbringungsarten sind weiter oben genannt.

Anhand der Fig. 7, 8 ist ersichtlich, dass gemeinsam mit dem Ausbilden entsprechender Öffnungen in dem Grundkörper 3 zur Ausbildung entsprechender Lüftungsöffnungen 7 ein Umformprozess des Grundkörpers 3, insbesondere in eine dem herzustellenden Karosseriebauteil 1 entsprechende dreidimensionale Bauteilgeometrie, erfolgt bzw. durchgeführt wird. Der Umformprozess erfolgt über einen simultanen Umformprozess, wie z. B. Tiefziehen, Pressen, etc.

Im Rahmen des Verfahrens ist es ferner möglich, dass vor, nach oder gemeinsam mit dem Ausbilden entsprechender Öffnungen in dem Grundkörper 3 zur Ausbildung entsprechender Lüftungsöffnungen 7 wenigstens ein Konfektionierungsprozess zur Konfektionierung der bereitgestellten wenigstens einen Lage des in einer Kunststoffmatrix eingebetteten Fasergeleges in eine dem herzustellenden Karosseriebauteil 1 entsprechende oder für dessen Herstellung geeignete Formkontur erfolgt bzw. durchgeführt wird. Die simultane Konfektionierung kann z. B. über im Zusammenhang mit der Ausbildung entsprechender grundkörperseitiger Öffnungen genannte Stanzprozesse erfolgen.

Außerdem ist es möglich, dass vor, nach oder gemeinsam mit dem Ausbilden entsprechender Öffnungen in dem Grundkörper 3 zur Ausbildung entsprechender Lüftungsöffnungen ein zumindest abschnittsweises Erwärmen des Grundkörpers 3 erfolgt bzw. durchgeführt wird. Die Erwärmung kann z. B. durch energiereiche Strahlung, insbesondere Infrarot-Strahlung, oder eine geeignete Temperierung der zur Durchführung des Verfahrens verwendeten Vorrichtung bzw. Einrichtungen realisiert werden.

Selbstverständlich ist es auch möglich, wenigstens eine, insbesondere flächige, Lage eines in einer Kunststoffmatrix eingebetteten Fasergeleges mit wenigstens einer Öffnung zur Ausbildung des oder eines Teils des Grundkörpers 3 mit wenigstens einer Lüftungsöffnung 7 bereitzustellen. In diesem Fall kann auf die gesonderte Ausbildung von Öffnungen in dem Grundkörper 3 typischerweise verzichtet werden, da bereits ein Grundkörper 3 mit entsprechenden Öffnungen vorliegt.

Anhand der mit Bezug auf die in den in den Fig. 6 bis 9 gezeigten Ausführungsbeispiele beschriebenen Verfahrensschritte lässt sich die mögliche Realisierung einer hochintegrierten sowie fertigungs- bzw. prozesstechnisch zuverlässigen Herstellung entsprechender Karosseriebauteile 1 erkennen. Insbesondere ist es möglich, entsprechende Entlüftungsvorrichtungen 4 auf fertigungs- bzw. prozesstechnisch zuverlässige Weise in ein entsprechendes Karosseriebauteil 1 zu integrieren.

Das anhand der in den in den Fig. 6 bis 9 gezeigten Ausführungsbeispiele erläuterte Verfahren wird über eine nicht näher bezeichnete Vorrichtung zur Herstellung eines entsprechenden Karosseriebauteils 1 durchgeführt. Die Vorrichtung umfasst:
- wenigstens eine erste Einrichtung zum Bereitstellen wenigstens einer, insbesondere flächigen, Lage eines in einer Kunststoffmatrix eingebetteten Fasergeleges zur Ausbildung des oder eines Teils des Grundkörpers 3 und zum Ausbilden wenigstens einer Öffnung in wenigstens eine bereitgestellte, insbesondere flächige, Lage eines in einer Kunststoffmatrix eingebetteten Fasergeleges zur Ausbildung des oder eines Teils des oder eines Grundkörpers 3 des Karosseriebauteils 1 oder
- wenigstens eine erste Einrichtung zum Bereitstellen wenigstens einer, insbesondere flächigen, Lage eines in einer Kunststoffmatrix eingebetteten Fasergeleges mit wenigstens einer Öffnung zur Ausbildung des oder eines Teils des Grundkörpers 3 des Karosseriebauteils 1 mit wenigstens einer Lüftungsöffnung 7, und
- wenigstens eine zweite Einrichtung, wie z. B. eine Spritzgießeinrichtung oder eine Prägeeinrichtung, zum Anbringen wenigstens eines Lüftungsklappenelements 6 an den oder einen Grundkörper 3 derart, dass dieses die oder wenigstens eine grundkörperseitig gebildete Öffnung zumindest abschnittsweise verschließt zur Ausbildung der Entlüftungsvorrichtung 4.

Die erste Einrichtung kann zur Ausbildung wenigstens einer Öffnung in wenigstens eine bereitgestellte, insbesondere flächige, Lage eines in einer Kunststoffmatrix eingebetteten Fasergeleges zur Ausbildung des oder eines Teils des oder eines Grundkörpers 3 des Karosseriebauteils 1 z. B. eine Stanz-/Biegeeinrichtung umfassen.

Die zweite Einrichtung kann zum Anbringen wenigstens eines Lüftungsklappenelements 6 an den oder einen Grundkörper 3 derart, dass dieses die oder wenigstens eine grundkörperseitig gebildete Öffnung zumindest abschnittsweise verschließt zur Ausbildung der Entlüftungsvorrichtung 4 z. B. eine Spritzgießeinrichtung oder eine Prägeeinrichtung umfassen.

## Patentansprüche

1. Verfahren zur Herstellung eines Karosseriebauteils (1) für ein Kraftfahrzeug (2), welches Karosseriebauteil (1) aus einem in einer Kunststoffmatrix eingebetteten ein- oder mehrlagigen Fasergelege gebildeten Grundkörper (3) gebildet ist und wenigstens eine Entlüftungsvorrichtung (4), insbesondere zur Entlüftung eines Innenraums (5) des Kraftfahrzeugs (2), umfasst, welche Entlüftungsvorrichtung (4) wenigstens eine über wenigstens ein Lüftungsklappenelement (6) reversibel verschließbare Lüftungsöffnung (7) umfasst, wobei das Verfahren die Schritte umfasst:
- Bereitstellen wenigstens einer, insbesondere flächigen, Lage eines in einer Kunststoffmatrix eingebetteten ein- oder mehrlagigen Fasergeleges zur Ausbildung des oder eines Teils des Grundkörpers (3),
- Ausbilden wenigstens einer Öffnung in dem Grundkörper (3) zur Ausbildung wenigstens einer Lüftungsöffnung (7), oder
- Bereitstellen wenigstens einer, insbesondere flächigen, Lage eines in einer Kunststoffmatrix eingebetteten ein- oder mehrlagigen Fasergeleges mit wenigstens einer Öffnung zur Ausbildung des oder eines Teils des Grundkörpers (3) mit wenigstens einer Lüftungsöffnung (7), und
- Anbringen wenigstens eines Lüftungsklappenelements (6) an den Grundkörper (3) derart, dass dieses die wenigstens eine grundkörperseitige Öffnung zumindest abschnittsweise reversibel verschließt, zur Ausbildung der Entlüftungsvorrichtung (4).

2. Verfahren nach Anspruch 1, **dadurch gekennzeichnet, dass** das wenigstens eine oder wenigstens ein Lüftungsklappenelement (6) unmittelbar an den Grundkörper (3) angebracht wird.

3. Verfahren nach Anspruch 2, **dadurch gekennzeichnet, dass** wenigstens zwei durch wenigstens einen, insbesondere steg- bzw. traversenartigen, Grundkörperabschnitt (3a) getrennte Öffnungen in dem Grundkörper (3) ausgebildet oder bereitgestellt werden und wenigstens ein Lüftungsklappenelement (6) derart an den Grundkörper (3) angebracht wird, dass es die wenigstens zwei grundkörperseitigen Öffnungen in einer Schließstellung reversibel verschließt, wobei es abschnittsweise an dem Grundkörperabschnitt (3a) anliegt., oder wenigstens zwei durch wenigstens einen, insbesondere steg- bzw. traversenartigen, Grundkörperabschnitt (3a) getrennte Öffnungen in dem Grundkörper (3) ausgebildet oder bereitgestellt werden und ein erstes Lüftungsklappenelement (6) derart an den Grundkörper (3) angebracht wird, dass es eine erste grundkörperseitige Öffnung in einer Schließstellung reversibel verschließt, und wenigstens ein weiteres Lüftungsklappenelement (6) derart an den wenigstens einen Grundkörperabschnitt (3a) angebracht wird, dass es die wenigstens eine weitere grundkörperseitige Öffnung in einer Schließstellung reversibel verschließt.

4. Verfahren nach Anspruch 2 oder 3, **dadurch gekennzeichnet, dass** wenigstens ein Lüftungsklappenelement (6) mittels wenigstens einer form- und/oder kraft- und/oder stoffschlüssigen Anbringungsart unmittelbar an den Grundkörper (3) oder an einen entsprechenden Grundkörperabschnitt (3a) angebracht wird.

5. Verfahren nach Anspruch 4, **dadurch gekennzeichnet, dass** das Anbringen des wenigstens einen oder wenigstens eines Lüftungsklappenelements (5) an den Grundkörper (3) oder an einen entsprechenden Grundkörperabschnitt (3a) mittels einer stoffschlüssigen Anbringungsart über Anspritzen in einem Spritzgießprozess, über Anschweißen in einem Schweißprozess, insbesondere einem Ultraschallschweißprozess, über Ankleben in einem Klebeprozess oder kraft- und/oder formschlüssig über Anprägen in einem Prägeprozess, über Annieten in einem Nietprozess oder über Verrasten in einem Verrastprozess erfolgt.

6. Verfahren nach einem der vorangehenden Ansprüche, **dadurch gekennzeichnet, dass** wenigstens ein Lüftungsklappenelement (6) mittelbar über wenigstens eine Rahmenstruktur (9) an den Grundkörper (3) angebracht wird, wobei die wenigstens eine Rahmenstruktur (9) wenigstens einen, insbesondere steg- bzw. traversenartigen, Rahmenabschnitt (9a) und eine einen Teil einer entlüftungsvorrichtungsseitigen Lüftungsöffnung (7) bildende Durchbrechung (10) umfasst.

7. Verfahren nach Anspruch 6, **dadurch gekennzeichnet, dass** wenigstens eine, insbesondere flächige, Lage eines in einer thermoplastischen Kunststoffmatrix eingebetteten Fasergeleges zur Ausbildung des oder eines Teils des Grundkörpers (3) verwendet wird.

8. Verfahren nach Anspruch 6 oder 7, **dadurch gekennzeichnet, dass** das Anbringen der wenigstens einen Rahmenstruktur (9) an den Grundkörper (3) mittels wenigstens einer form- und/oder kraft- und/oder stoffschlüssigen Anbringungsart erfolgt.

9. Verfahren nach einem der Ansprüche 6 bis 8, **dadurch gekennzeichnet, dass** das Anbringen der wenigstens einen Rahmenstruktur (9) an den Grundkörper (3) mittels einer stoffschlüssigen Anbringungsart über Anspritzen in einem Spritzgießprozess, über Anschweißen in einem Schweißprozess, insbesondere einem Ultraschallschweißprozess, über Ankleben in einem Klebeprozess oder kraft- und/oder formschlüssig über Anprägen in einem Prägeprozess, über Annieten in einem Nietprozess oder über Verrasten in einem Verrastprozess erfolgt.

10. Verfahren nach einem der vorangehenden Ansprüche, **dadurch gekennzeichnet, dass** ein Lüftungsklappenelement (6) mit einem Anbringungsbereich (6a) zur Anbringung des Lüftungsklappenelements (6) an den Grundkörper (3) oder an einen entsprechenden Grundkörperabschnitt (3a) und einem Klappenbereich (6b) zum reversiblen Verschließen der wenigstens einen oder wenigstens einer grundkörperseitigen Öffnung vorgesehen wird, wobei das Lüftungsklappenelement (6) über den wenigstens einen Anbringungsbereich (6a) an den Grundkörper (3) oder an einen entsprechenden Grundkörperabschnitt (3a) angebracht wird, derart, dass es mit dem Klappenbereich (6b) die wenigstens eine grundkörperseitig gebildete Öffnung zumindest abschnittsweise verschließt, oder
dass ein Lüftungsklappenelement (6) mit einem Anbringungsbereich (6a) zur Anbringung des Lüftungsklappenelements (6) an der oder einer Rahmenstruktur (9) und einem Klappenbereich (6b) zum reversiblen Verschließen der wenigstens einen oder wenigstens einer rahmenstrukturseitigen Durchbrechung (10) vorgesehen wird, wobei das Lüftungsklappenelement (6) über den wenigstens einen Anbringungsbereich (6a) an die Rahmenstruktur (9) angebracht wird, derart, dass es mit dem Klappenbereich (6b) die wenigstens eine rahmenstrukturseitige Durchbrechung (10) zumindest abschnittsweise verschließt.

11. Verfahren nach einem der vorangehenden Ansprüche, **dadurch gekennzeichnet, dass** vor, nach oder gemeinsam mit dem Ausbilden der wenigstens einen Öffnung in dem Grundkörper (3) zur Ausbildung der wenigstens einen Lüftungsöffnung (7) wenigstens ein Konfektionierungsprozess zur Konfektionierung der bereitgestellten wenigstens einen Lage des in einer Kunststoffmatrix eingebetteten Fasergeleges in eine dem herzustellenden Karosseriebauteil (1) entsprechende oder für dessen Herstellung geeignete Formkontur erfolgt.

12. Verfahren nach einem der vorangehenden Ansprüche, **dadurch gekennzeichnet, dass** vor, nach oder gemeinsam mit dem Ausbilden der wenigstens einen Öffnung in dem Grundkörper (3) zur Ausbildung der wenigstens einen Lüftungsöffnung (7) wenigstens ein Umformprozess des Grundkörpers (3), insbesondere in eine dem herzustellenden Karosseriebauteil (1) entsprechende dreidimensionale Bauteilgeometrie, erfolgt, und/oder ein zumindest abschnittsweises Erwärmen des Grundkörpers (3) erfolgt.

13. Verfahren nach einem der vorangehenden Ansprüche, **dadurch gekennzeichnet, dass** das Ausbilden der wenigstens einen Öffnung in dem Grundkörper (3) zur Ausbildung wenigstens einer Lüftungsöffnung (7) mittels wenigstens eines Stanz- und/oder Schneidprozesses erfolgt.

14. Verfahren nach einem der vorangehenden Ansprüche, **dadurch gekennzeichnet, dass** zur Ausbildung des oder eines Teils des Grundkörpers (3) wenigstens eine, insbesondere flächige, Lage eines in einer thermoplastischen oder duroplastischen Kunststoffmatrix eingebetteten Fasergeleges verwendet wird.

15. Vorrichtung zur Herstellung eines Karosseriebauteils (1) für ein Kraftfahrzeug (2), welches Karosseriebauteil (1) aus einem in einer Kunststoffmatrix eingebetteten ein- oder mehrlagigen Fasergelege gebildeten Grundkörper (3) gebildet ist und wenigstens eine Entlüftungsvorrichtung (4), insbesondere zur Entlüftung eines Innenraums (5) des Kraftfahrzeugs (2), umfasst, welche Entlüftungsvorrichtung (4) wenigstens eine über wenigstens ein Lüftungsklappenelement (6) reversibel verschließbare Lüftungsöffnung (7) umfasst, wobei die Vorrichtung umfasst:
- wenigstens eine Einrichtung zum Bereitstellen wenigstens einer, insbesondere flächigen, Lage eines in einer Kunststoffmatrix eingebetteten Fasergeleges zur Ausbildung des oder eines Teils des Grundkörpers (3) und zum Ausbilden wenigstens einer Öffnung in wenigstens eine bereitgestellte, insbesondere flächige, Lage eines in einer Kunststoffmatrix eingebetteten ein- oder mehrlagigen Fasergeleges zur Ausbildung des oder eines Teils des oder eines Grundkörpers (3) des Karosseriebauteils (1), oder
- wenigstens eine Einrichtung zum Bereitstellen wenigstens einer, insbesondere flächigen, Lage eines in einer Kunststoffmatrix eingebetteten ein- oder mehrlagigen Fasergeleges mit wenigstens einer Öffnung zur Ausbildung des oder eines Teils des Grundkörpers (3) des Karosseriebauteils (1) mit wenigstens einer Lüftungsöffnung (7), und
- wenigstens eine Einrichtung zum Anbringen wenigstens eines Lüftungsklappenelements (6) an den oder einen Grundkörper (3) derart, dass dieses die oder wenigstens eine grundkörperseitige Öffnung zumindest abschnittsweise verschließt, zur Ausbildung der Entlüftungsvorrichtung (4).

## Claims

1. Method for producing a body component (1) for a motor vehicle (2), which body component (1) is formed by a main body (3) formed from a single-layer or multi-layer laid scrim embedded in a plastics matrix and comprises at least one ventilation device (4), in particular for ventilating an interior (5) of the motor vehicle (2), which ventilation device (4) comprises at least one ventilation opening (7) that can be reversibly closed by means of at least one ventilation flap element (6), wherein the method comprises the steps of:
- providing at least one, in particular flat, layer of a single-layer or multi-layer laid scrim embedded in a plastics matrix in order to form the part or a part of the main body (3),
- forming at least one opening in the main body (3) in order to form at least one ventilation opening (7), or
- providing at least one, in particular flat, layer of a single-layer or multi-layer laid scrim embedded in a plastics matrix having at least one opening in order to form the part or a part of the main body (3) having at least one ventilation opening (7), and
- attaching at least one ventilation flap element (6) to the main body (3) such that said element reversibly closes the at least one opening in the main body, at least in portions, in order to form the ventilation device (4).

2. Method according to claim 1, **characterized in that** the at least one or at least one ventilation flap element (6) is attached directly to the main body (3).

3. Method according to claim 2, **characterized in that** at least two openings that are separated by at least one in particular web- or crossbar-like main body portion (3a) are formed or provided in the main body (3) and at least one ventilation flap element (6) is attached to the main body (3) such that said element reversibly closes the at least two openings in the main body in a closed position in which said element rests against the main body portion (3a) in portions, or at least two openings separated by at least one in particular web- or crossbar-like main body portion (3a) are formed or provided in the main body (3) and a first ventilation flap element (6) is attached to the main body (3) such that said element reversibly closes a first opening in the main body in a closed position, and at least one further ventilation flap element (6) is attached to the at least one main body portion (3a) such that said element reversibly closes the at least one

4. Method according to either claim 2 or claim 3, **characterized in that** at least one ventilation flap element (6) is attached directly to the main body (3) or to a corresponding main body portion (3a) by means of at least one interlocking and/or frictional and/or integrally bonded attachment method.

5. Method according to claim 4, **characterized in that** the at least one or at least one ventilation flap element (5) is attached to the main body (3) or to a corresponding main body portion (3a) using an integrally bonded attachment method by being molded on in an injection molding process, by being welded on in a welding process, in particular an ultrasonic welding process, by being glued on in a gluing process, or in an interlocking and/or frictional manner by being stamped on in a stamping process, by being riveted on in a riveting process or by being latched on in a latching process.

6. Method according to any of the preceding claims, **characterized in that** at least one ventilation flap element (6) is attached indirectly to the main body (3) by means of at least one frame structure (9), the at least one frame structure (9) having at least one, in particular web- or crossbar-like, frame portion (9a) and an aperture (10) that forms part of a ventilation opening (7) in the ventilation device.

7. Method according to claim 6, **characterized in that** at least one, in particular flat, layer of a laid scrim embedded in a thermoplastic plastics matrix is used to form the part or a part of the main body (3).

8. Method according to either claim 6 or claim 7, **characterized in that** the at least one frame structure (9) is attached to the main body (3) by means of at least one interlocking and/or frictional and/or integrally bonded attachment method.

9. Method according to any of claims 6 to 8, **characterized in that** the at least one frame structure (9) is attached to the main body (3) using an integrally bonded attachment method by being molded on in an injection molding process, by being welded on in a welding process, in particular an ultrasonic welding process, by being glued on in a gluing process, or in an interlocking and/or frictional manner by being stamped on in a stamping process, by being riveted on in a riveting process or by being latched on in a latching process.

10. Method according to any of the preceding claims, **characterized in that** a ventilation flap element (6) is provided that has an attachment region (6a) for attaching the ventilation flap element (6) to the main body (3) or to a corresponding main body portion (3a) and a flap region (6b) for reversibly closing the at least one or at least one opening in the main body, the ventilation flap element (6) being attached to the main body (3) or to a corresponding main body portion (3a) via the at least one attachment region (6a) such that said element closes the at least one opening formed in the main body by means of the flap region (6b), at least in portions, or **in that** a ventilation flap element (6) is provided that has an attachment region (6a) for attaching the ventilation flap element (6) to the or a frame structure (9) and a flap region (6b) for reversibly closing the at least one or at least one aperture (10) in the frame structure, the ventilation flap element (6) being attached to the frame structure (9) via the at least one attachment region (6a) such that said element closes the at least one aperture (10) in the frame structure by means of the flap region (6b), at least in portions.

11. Method according to any of the preceding claims, **characterized in that** before, after or while the at least one opening in the main body (3) is formed in order to form the at least one ventilation opening (7), at least one manufacturing process for manufacturing the at least one provided layer of the laid scrim embedded in a plastics matrix is carried out in a mold contour that corresponds to the body component (1) to be produced or is suitable for the production of said component.

12. Method according to any of the preceding claims, **characterized in that** before, after or while the at least one opening in the main body (3) is formed in order to form the at least one ventilation opening (7), at least one shaping process of the main body (3) is carried out, in particular in a three-dimensional component geometry corresponding to the body component (1) to be produced, and/or the main body (3) is heated at least in portions.

13. Method according to any of the preceding claims, **characterized in that** the at least one opening in the main body (3) for forming at least one ventilation opening (7) is formed by means of at least one punching and/or cutting process.

14. Method according to any of the preceding claims, **characterized in that** at least one, in particular flat, layer of a laid scrim embedded in a thermoplastic or thermosetting plastics matrix is used to form the part or a part of the main body (3).

15. Device for producing a body component (1) for a motor vehicle (2), which body component (1) is formed by a main body (3) formed from a single-layer or multi-layer laid scrim embedded in a plastics matrix and comprises at least one ventilation device (4), in particular for ventilating an interior (5) of the motor vehicle (2), which ventilation device (4) comprises at least one ventilation opening (7) that can be reversibly closed by means of at least one ventilation flap element (6), wherein the device comprises:
- at least one apparatus for providing at least one, in particular flat, layer of a laid scrim embedded in a plastics matrix for forming the part or a part of the main body (3) and for forming at least one opening in at least one provided, in particular flat, layer of a single-layer or multi-layer laid scrim embedded in a plastics matrix for forming the part or a part of the or a main body (3) of the body component (1), or
- at least one apparatus for providing at least one, in particular flat, layer of a single-layer or multi-layer laid scrim embedded in a plastics matrix having at least one opening for forming the part or a part of the main body (3) of the body component (1) having at least one ventilation opening (7), and
- at least one apparatus for attaching at least one ventilation flap element (6) to the or a main body (3) such that said element closes the or at least one opening in the main body, at least in portions, in order to form the ventilation device (4).

## Revendications

1. Procédé de fabrication d'un composant de carrosserie (1) pour un véhicule automobile (2), lequel composant de carrosserie (1) est formé à partir d'un corps de base (3) formé d'une nappe de fibres monocouche ou multicouche enrobée dans une matrice plastique et comprend au moins un dispositif de purge d'air (4), en particulier pour la purge de l'air d'un habitacle (5) du véhicule automobile (2), lequel dispositif de purge d'air (4) comprend au moins un orifice d'aération (7) pouvant être fermé de manière réversible par au moins un élément à clapet d'aération (6), le procédé comprenant les étapes :
- de mise à disposition d'au moins une couche, en particulier plate, d'une nappe de fibres monocouche ou multicouche enrobée dans une matrice plastique pour réaliser le corps de base (3) ou une partie du corps de base (3),
- de réalisation d'au moins un orifice dans le corps de base (3) pour réaliser au moins un orifice d'aération (7), ou
- de mise à disposition d'au moins une couche, en particulier plate, d'une nappe de fibres monocouche ou multicouche enrobée dans une matrice plastique comportant au moins un orifice pour réaliser le corps de base (3) ou une partie du corps de base (3) comportant au moins un orifice d'aération (7), et
- de fixation d'au moins un élément à clapet d'aération (6) au corps de base (3) de telle sorte que celui-ci ferme, de manière réversible, au moins sur certaines parties, l'au moins un orifice côté corps de base, pour réaliser le dispositif de purge d'air (4).

2. Procédé selon la revendication 1, **caractérisé en ce que** l'au moins un ou au moins un élément à clapet d'aération (6) est fixé directement au corps de base (3).

3. Procédé selon la revendication 2, **caractérisé en ce qu'**au moins deux orifices séparés par au moins une section de corps de base (3a), en particulier de type bande ou traverse, sont réalisés ou fournis dans le corps de base (3), et qu'au moins un élément à clapet d'aération (6) est fixé au corps de base (3) de telle sorte qu'il ferme, de manière réversible, les au moins deux orifices côté corps de base dans une position fermée, celui-ci reposant sur certaines parties contre la section de corps de base (3a), ou qu'au moins deux orifices séparés par au moins une section de corps de base (3a), en particulier de type bande ou traverse, sont réalisés ou fournis dans le corps de base (3), et qu'un premier élément à clapet d'aération (6) est fixé au corps principal (3) de telle sorte qu'il ferme, de manière réversible, un premier orifice côté corps de base dans une position fermée, et qu'au moins un autre élément à clapet d'aération (6) est fixé à l'au moins une section de corps de base (3a) de telle manière qu'il ferme, de manière réversible, l'au moins un autre orifice côté corps de base dans une position fermée.

4. Procédé selon la revendication 2 ou 3, **caractérisé en ce qu'**au moins un élément à clapet d'aération (6) est fixé directement au corps de base (3) ou à une section de corps de base correspondante (3a) au moyen d'au moins un mode de fixation par complémentarité de forme et/ou à force et/ou par liaison de matière.

5. Procédé selon la revendication 4, **caractérisé en ce que** la fixation de l'au moins un ou d'au moins un élément à clapet d'aération (5) au corps de base (3) ou à une section de corps de base correspondante (3a) est effectuée au moyen d'un mode de fixation par liaison de matière par pulvérisation dans un processus de moulage par injection, par soudage dans un processus de soudage, en particulier un processus de soudage par ultrasons, par collage dans un processus de collage ou à force et/ou par complémentarité de forme par gaufrage dans un processus de gaufrage, par rivetage dans un processus de rivetage, ou par encliquetage dans un processus d'encliquetage.

6. Procédé selon l'une des revendications précédentes, **caractérisé en ce qu'**au moins un élément à clapet d'aération (6) est fixé indirectement au corps de base (3) par au moins une structure de cadre (9), l'au moins une structure de cadre (9) comprenant au moins une section de cadre (9a), en particulier de type bande ou traverse, et une partie d'un passage (10) formant l'orifice d'aération (7) côté dispositif de purge d'air.

7. Procédé selon la revendication 6, **caractérisé en ce qu'**au moins une couche, en particulier plate, d'une nappe de fibres enrobée dans une matrice plastique thermoplastique est utilisée pour réaliser le corps de base (3) ou une partie du corps de base (3).

8. Procédé selon la revendication 6 ou 7, **caractérisé en ce que** la fixation de l'au moins une structure de cadre (9) au corps de base (3) est effectuée au moyen d'au moins un mode de fixation par complémentarité de forme et/ou à force et/ou par liaison de matière.

9. Procédé selon l'une des revendications 6 à 8, **caractérisé en ce que** la fixation de l'au moins une structure de cadre (9) au corps de base (3) est effectuée au moyen d'un mode de fixation par liaison de matière par pulvérisation dans un processus de moulage par injection, par soudage dans un processus de soudage, en particulier un processus de soudage par ultrasons, par collage dans un processus de collage, ou à force et/ou par complémentarité de forme par gaufrage dans un processus de gaufrage, par rivetage dans un processus de rivetage, ou par encliquetage dans un processus d'encliquetage.

10. Procédé selon l'une des revendications précédentes, **caractérisé en ce qu'**un élément à clapet d'aération (6) est pourvu d'une zone de fixation (6a) destinée à fixer l'élément à clapet d'aération (6) au corps de base (3) ou à une section de corps de base correspondante (3a) et d'une zone de clapet (6b) destinée à fermer de manière réversible l'au moins un ou au moins un orifice côté corps de base, l'élément à clapet d'aération (6) étant fixé au corps de base (3) ou à une section de corps de base correspondante (3a) par l'au moins une zone de fixation (6a), de telle sorte qu'il ferme, avec la zone de clapet (6b), l'au moins un orifice formé côté corps de base au moins sur certaines parties, ou
qu'un élément à clapet d'aération (6) est pourvu d'une zone de fixation (6a) destinée à fixer l'élément à clapet d'aération (6) à la ou à une structure de cadre (9) et d'une zone de clapet (6b) destinée à fermer de manière réversible l'au moins un ou au moins un passage (10) côté structure de cadre, l'élément à clapet d'aération (6) étant fixé à la structure de cadre (9) par l'au moins une zone de fixation (6a) de telle sorte qu'il ferme, avec la zone de clapet (6b), l'au moins un passage (10) côté structure de cadre, au moins sur certaines parties.

11. Procédé selon l'une des revendications précédentes, **caractérisé en ce que**, avant, après ou conjointement avec la réalisation de l'au moins un orifice dans le corps de base (3) pour réaliser l'au moins un orifice d'aération (7), au moins un processus d'assemblage destiné à l'assemblage de l'au moins une couche fournie de la nappe de fibres enrobée dans une matrice plastique est effectué dans un contour de forme qui correspond au composant de carrosserie à fabriquer (1) ou qui convient à sa fabrication.

12. Procédé selon l'une des revendications précédentes, **caractérisé en ce qu'**au moins un processus de formage du corps de base (3), en particulier dans une géométrie de composant tridimensionnelle correspondant au composant de carrosserie (1) à fabriquer et/ou un chauffage du corps de base (3) au moins sur certaines parties sont effectués avant, après ou conjointement avec la réalisation de l'au moins un orifice dans le corps de base (3) pour former l'au moins un orifice d'aération (7).

13. Procédé selon l'une des revendications précédentes, **caractérisé en ce que** la réalisation de l'au moins un orifice dans le corps de base (3) pour réaliser au moins un orifice d'aération (7) est effectuée au moyen d'au moins un processus d'estampage et/ou de découpe.

14. Procédé selon l'une des revendications précédentes, **caractérisé en ce qu'**au moins une couche, en particulier plate, d'une nappe de fibres enrobée dans une matrice plastique thermoplastique ou thermodurcissable est utilisée pour réaliser le corps de base (3) ou une partie du corps de base (3).

15. Dispositif de fabrication d'un composant de carrosserie (1) pour un véhicule automobile (2), lequel composant de carrosserie (1) est formé à partir d'un corps de base (3) formé d'une nappe de fibres monocouche ou multicouche enrobée dans une matrice plastique et comprend au moins un dispositif de purge d'air (4), en particulier destiné à la purge de l'air d'un habitacle (5) du véhicule automobile (2), lequel dispositif de purge d'air (4) comprend au moins un orifice aération (7) pouvant être fermé de manière réversible par au moins un élément à clapet d'aération (6), le dispositif comprenant :
- au moins un moyen destiné à fournir au moins une couche, en particulier plate, d'une nappe de fibres enrobée dans une matrice plastique pour réaliser le corps de base (3) ou une partie du corps de base (3) et pour réaliser au moins un orifice dans au moins une couche fournie, en particulier plate, d'une nappe de fibres monocouche ou multicouche enrobée dans une matrice plastique pour réaliser le corps de base (3) ou une partie du corps de base (3) du composant de carrosserie (1), ou
- au moins un moyen destiné à fournir au moins une couche, en particulier plate, d'une nappe de fibres monocouche ou multicouche enrobée dans une matrice plastique, comportant au moins un orifice pour former le corps de base (3) ou une partie du corps de base (3) du composant de carrosserie (1) comportant au moins un orifice d'aération (7), et
- au moins un moyen destiné à fixer au moins un élément à clapet d'aération (6) au ou à un corps de base (3) de telle sorte que celui-ci ferme, au moins sur certaines parties, le ou au moins un orifice côté corps de base, pour réaliser le dispositif de purge d'air (4).
